# EUROPEAN PATENT SPECIFICATION

(11) **EP 3 323 496 B1**
(45) Date of publication and mention of the grant of the patent: **16.09.2020**
(21) Application number: 16199607.9
(22) Date of filing: 18.11.2016
(51) Int. Cl.: B01D 53/40, B01D 53/73, B01D 53/80, B01D 53/96, B01D 53/50

(54) **APPARATUS AND METHOD FOR REDUCING ACID GAS EMISSIONS WITH ZERO LIQUID DISCHARGE OF WASTE WATER**
VORRICHTUNG UND VERFAHREN ZUR REDUZIERUNG VON SAUERGASEMISSIONEN OHNE FLÜSSIGKEITSAUSSTOSS VON ABWASSER
APPAREIL ET PROCÉDÉ PERMETTANT DE RÉDUIRE LES ÉMISSIONS DE GAZ ACIDES SANS AUCUNE ÉVACUATION LIQUIDE D'EAUX USÉES

(43) Date of publication of application: 23.05.2018
(73) Proprietor: General Electric Technology GmbH, 5400 Baden (CH)
(72) Inventor: WANG, Wuyin, 352 49 Vaxjo (SE); ZHOU, Jingchuan, 352 49 Vaxjo (SE); JOHANSSON, Lars-Erik, 352 41 Vaxjo (SE)
(74) Representative: BRP Renaud & Partner mbB Rechtsanwälte Patentanwälte Steuerberater

(56) References cited:
- EP-A1- 2 040 823
- EP-A1- 3 025 774
- WO-A1-2006/030398
- US-A- 4 322 393
- US-A1- 2012 240 761
- US-A1- 2014 241 971

## Description

### TECHNICAL FIELD

Generally, the present disclosure relates to apparatus or equipment and a method for using the apparatus or equipment to reduce flue gas acid gas emissions with zero liquid discharge of waste water. More specifically, the present disclosure relates to a wet flue gas desulfurization system for reducing flue gas acid gas emissions used in combination with additional equipment to achieve zero liquid discharge of waste water generated in the operation of the wet flue gas desulfurization system.

### BACKGROUND

Utility and industrial plants such as power plants, waste-to-energy facilities, cement kilns, and other facilities firing fossil fuels can be subject to strict limits with respect to air emissions and waste water discharge to help ensure clean and environmentally sound operation. Traditionally, compliance with air emissions limits is achieved through the use of a wet or dry flue gas desulfurization system. Water treatment systems can also be utilized to treat waste water discharge for compliance with applicable waste water regulations. Examples of such flue gas cleaning systems and/or waste water treatment systems are described in International Publication No. WO 2006030398, U.S. Patent Application Publication Nos. 2009/0294377, 2011/0262331, 2012/0240761, 2013/0248121, and 2013/0220792, U.S. Patent Nos. 6,076,369, 7,524,470, 7,625,537, 8,388,917, and 8,475,750, European Patent Publication No. EP 1 955 755, and Japanese Published Patent Application No. JP 2012200721. International Publication No. WO 2008008568 A1 (EP2040823 A1) describes a method for removing contaminants from a flue gas stream. It also discloses a controlling device to control the amount of solids to a mixer. European Patent Application Publication No. EP 3 025 774 A1 describes a system comprising the features of the preamble of claim 1.

In power plants, capital costs for air emissions systems utilizing a wet or dry flue gas desulfurization system and the balance of plant equipment associated therewith, e.g., ducts, fans, bulk material handling systems, and the like, are often relatively expensive, ranging between US$200 to US$500 per kilowatt (kW) of plant capacity. Retrofitting existing plants to include air 1 emissions systems and equipment associated therewith, can render a plant uneconomical due to the capital costs of such systems/equipment. In addition to the capital costs, wet and dry flue gas desulfurization systems also involve substantial operating costs, such as for operations and management staffing, reagent consumption, and auxiliary power usage.

In power plants, waste water treatment systems are often configured to neutralize and precipitate heavy metals, perform biological treatment of generated waste water, and also filter the waste water to clean the waste water prior to environmentally conservative release thereof to the environment. Costs associated with operation of waste water treatment systems are also relatively significant in terms of capital costs and operating costs.

Considering the foregoing, it is desirable to provide equipment and a method for using the equipment to reduce flue gas acid gas emissions with zero liquid discharge of waste water for clean and environmentally sound operation of a plant. It is also desirable if such equipment, and the method for using the equipment, reduced capital and operation costs previously associated with such plant operation.

### SUMMARY

A plant comprising a wet flue gas desulfurization (WFGD) system for reducing flue gas acid gas emissions used in combination with additional equipment to achieve zero liquid discharge of waste water generated in the operation of the wet flue gas desulfurization system is disclosed herein. As such, the subject plant includes a combustion unit that combusts a fuel to produce steam. The produced steam may be supplied to a steam turbine for use in generating electricity, or supplied elsewhere for other uses such as for example district heating, process heating, or the like. The fuel supplied to the combustion unit can be a fossil fuel such as coal, oil, or natural gas. In the combustion of fuel in the presence of oxygen in the combustion unit, in addition to producing steam, flue gas is produced. As a first step in treating the produced flue gas to reduce emissions, the combustion unit is fluidly connected via a duct to a nitrogen oxide reducing system. The nitrogen oxide reducing system may be a selective catalytic reduction (SCR) system, a selective non-catalytic reduction (SNCR) system or another type of system configured to remove nitrogen oxides, e.g., NO₂, NO₃, NOₓ, from the flue gas.

After removal of nitrogen oxides from the flue gas in the nitrogen oxide reducing system, the flue gas flows via a duct into a fluidly connected heat exchanger or air preheater. Within the heat exchanger or air preheater, heat energy from the relatively hot flue gas is transferred to a heat transfer fluid thereby cooling the relatively hot flue gas to obtain a relatively cool flue gas, while heating a relatively cool heat transfer fluid to obtain a relatively hot heat transfer fluid. The relatively hot heat transfer fluid flows from the heat exchanger or air preheater to the combustion unit for beneficial use of the transferred heat energy in the combustion unit for fuel combustion and steam production. Following beneficial use of the transferred heat energy in the combustion unit, the resulting relatively cool heat transfer fluid may as one option be recirculated from the combustion unit back to the heat exchanger or air preheater for reheating. The heat transfer fluid may be a gas, water, an oil, or a similar such heat retaining fluid.

After flowing through the heat exchanger or air preheater, a relatively large first portion of the now relatively cool flue gas flows through a main duct to a fluidly connected particulate collection system. A relatively small second portion of the now relatively cool flue gas flows via a controlled duct to a flash dryer as discussed in more detail below. The relatively large first portion of the flue gas flows through the particulate collection system for separation of solid material, such as combustion fly ash, dust, and the like, from the flue gas. For such purpose, the particulate collection system is a filter system or an electrostatic precipitator system. After the removal of solid material from the flue gas in the particulate collection system, the flue gas flows via a duct into a wet flue gas desulfurization (WFGD) system.

Within the wet flue gas desulfurization (WFGD) system, an alkaline reagent such as lime, limestone, hydrated lime, sodium carbonate, trona, and/or alkaline fly ash, and a liquid such as water and/or recycled waste water are supplied as a reagent slurry for contact with the flue gas flowing therethrough. Such intermixing contact between the reagent slurry and the flue gas results in a reaction between acid gas such as hydrogen chloride (HCI), hydrogen fluoride (HF), sulfur dioxide (SO₂), sulfur trioxide (SO₃), and sulfuric acid (H₂SO₄) present in the flue gas and the reagent slurry. This reaction between the acid gas and the reagent slurry produces a solid reaction product such as calcium sulfite (CaSO₃), calcium sulfate (CaSO₄), calcium chloride (CaCl₂), and/or calcium fluoride (CaF₂), thereby removing acid gas from the flue gas. By so removing acid gas from the flue gas, flue gas acid gas emissions are reduced. After removing acid gas from the flue gas, the so produced cleaned flue gas CG flows via a duct from the WFGD system to a stack for release to the environment from the stack. Reagent slurry used in the WFGD system may be recirculated within the WFGD system for repeated use, with solid reaction product continuously or periodically removed from the WFGD system for use elsewhere within the plant, or for use in the production of gypsum wall board or the like. Waste water from WFGD system may be continuously or periodically removed for supply to plant equipment useful for eliminating waste water discharge, i.e., zero liquid discharge, from the plant. Eliminating waste water discharge from the plant, eliminates operation costs associated with such waste water discharge. Hence, to eliminate waste water discharge from the plant and to eliminate operation costs associated therewith, waste water removed from the WFGD system is supplied via a duct to a brine concentrator.

The brine concentrator, through heated evaporation (not according to this invention), membrane separation and/or reverse osmosis, separates clean water from the WFGD system generated waste water. The brine concentrator may separate clean water from the waste water through heated evaporation by heating the waste water to produce steam. The steam is then condensed as clean water, which may be circulated to the WFGD system for use therein, or supplied for use elsewhere within the plant. Alternatively, the brine concentrator may separate clean water from the waste water through membrane separation by using a semipermeable membrane that allows for the flow of clean water through the membrane but blocks the flow of salts and other impurities from flow through the membrane. The clean water recovered following flow through the membrane may be circulated to the WFGD system for use therein, or supplied for use elsewhere within the plant. Alternatively, the brine concentrator may separate clean water from the waste water through reverse osmosis by applying a pressure to the waste water within the brine concentrator to reverse an osmotic process to force clean water from a waste water side of a membrane to a clean water side of a membrane. The clean water recovered following flow through the membrane may be circulated to the WFGD system for use therein, or supplied for use elsewhere within the plant. Waste water from the WFGD system includes dissolved solids or salts and suspended solids. As such, the waste water has a total solids concentration of about 1 weight percent to about 20 weight percent, or about 5 weight percent. As described above, within the brine concentrator clean water is recovered from the waste water thereby producing a concentrated brine of about 20 weight percent to about 55 weight percent, or about 30 weight percent solids. This concentrated brine is supplied via a duct to a mixer. The purpose of using the brine concentrator is to recover clean water for use and to reduce the amount of waste water requiring vaporization in order to achieve zero liquid discharge. Benefits of using the brine concentrator include both reducing plant water consumption and reducing the required capacity of the plant equipment dedicated to waste water treatment for zero liquid discharge . As an option, heat energy used by the brine concentrator for heated evaporation of the waste water to produce brine can be transferred at least partially via a heat exchanger arranged in the main duct between the controlled duct and the return duct used to return the relatively small second portion of relatively cool flue gas to the main duct. Also, waste water from the WFGD system may be introduced into the subject brine concentrator without neutralization, and the brine produced in the brine concentrator may be acidic, with a pH below 7.

The mixer supplied the so produced concentrated brine comprises a motor, and agitators and/or rotors driven by the motor. The mixer may be of the type disclosed in U.S. Patent No. 5,887,973. The mixer is operable for mixing the concentrated brine with additives such as lime and/or hydrated lime for purposes of adjusting properties of the solid material/dried particulates, with solid material supplied from the particulate collection system for purposes of brine adsorption and reducing plant discharge of solid material, and/or with dried particulates collected in a high performance collector for purposes of brine adsorption and reducing plant discharge of dried particulates. For these purposes, the concentrated brine is sprayed within the mixer via one or more nozzles for an even distribution of the concentrated brine on surfaces of the additives, solid material and/or dried particulates, to obtain a mixed dust with about a 1 percent to about 10 percent, or about a 3 percent, water content by weight. Once produced, the mixed dust is supplied via a duct to a flash dryer.

Within the flash dryer, the mixed dust from the mixer is capable of flash drying upon exposure to the relatively small second portion of the relatively cool flue gas supplied from the main duct downstream of the heat exchanger or air preheater, as discussed above. For purposes of the subject disclosure, flash drying is defined as drying of the mixed dust with about a 1 percent to about 10 percent, or about a 3 percent, water content by weight within about 3 seconds to about 60 seconds, or about 30 seconds. This relatively cool flue gas flowing through the flash dryer has a temperature of about 150°C to about 190°C, or about 170°C. The mixed dust concentration in the flash dryer is greater than about 1000 g/Nm³, which is efficiently flash dried through water evaporation into the flue gas. The relatively low water content of the mixed dust, distributed over a relatively large total surface area of the mixed dust, results in flash drying of the mixed dust within the flash dryer using relatively cool flue gas. The flash dryer used for this purpose is for example a pneumatic conveyor dryer, a fluidized bed dryer, or other such dryer capable of flash drying as defined herein. This flash drying of the mixed dust produces a dried dust. This flash drying of the mixed dust also achieves zero waste water/liquid discharge from the plant's WFGD system. The produced dried dust is entrained in the flue gas, which flows via a duct from the flash dryer to a high performance collector.

The high performance collector is defined herein as a relatively high performance, about 97 percent or greater, or about 98 percent or greater, efficiency particulate collector. A relatively high performance, about 97 percent or greater, or about 98 percent or greater, efficiency particulate collector is necessary to separate the dried dust from the flue gas, avoid overload of the particulate collection system in the main duct, and avoid affecting the properties of the solid material separated by the particulate collection system in the main duct. The benefits of using a relatively high performance, about 97 percent or greater, or about 98 percent or greater, efficiency particulate collector downstream of the flash dryer include avoiding overload of the particulate collection system in the main duct, and avoiding affecting the properties of the solid material separated by the particulate collection system in the main duct potentially making separation thereof more difficult. As such, the subject high performance collector may be a cyclone collector, a fabric filter or an electrostatic precipitator operable for high performance efficiency separation of the entrained dried dust from the flue gas, for collection thereof as dried particulates. The dried particulates collected in the high performance collector may be supplied to the mixer, used elsewhere in the plant, or otherwise disposed of in an environmentally conservative manner. Flue gas flows out from the high performance collector via a return duct that fluidly connects to the main duct with the relatively large first portion of relatively cool flue gas flowing from the heat exchanger or air preheater to the particulate collection system. To improve flue gas flow through the flash dryer and the high performance collector, a fan is arranged in the return duct downstream of the high performance collector with a low pressure side of the fan upstream of the fan with regard to the flow of flue gas and a high pressure side of the fan downstream of the fan with regard to the flow of flue gas.

The subject plant also includes a control device. The control device electronically receives temperature measurements measured by one or more temperature sensors arranged in or adjacent to an outlet of the flash dryer. Based on the temperature measurements electronically transmitted by the one or more sensors and electronically received by the control device from the one or more temperature sensors, the control device electronically signals adjustment of a flow valve arranged in the controlled duct for the flow of the relatively small second portion of relatively cool flue gas to the flash dryer. For example, if the temperature measurements electronically received by the control device are higher than a programmed temperature set point or range, the control device will electronically signal adjustment of the flow valve to decrease the flow of relatively cool flue gas to the flash dryer. If the temperature measurements electronically received by the control device are about the same as a programmed temperature set point or range, the control device will not electronically signal adjustment of the flow valve to affect the flow of relatively cool flue gas to the flash dryer. If the temperature measurements electronically received by the control device are lower than a programmed temperature set point or range, the control device will electronically signal adjustment of the flow valve to increase the flow of relatively cool flue gas to the flash dryer.

Also, the control device electronically receives measurements of the properties of the mixed dust from the mixer via electronic transmissions from one or more sensors arranged in or adjacent the mixer, and properties of the dried particulates separated in the high performance collector via electronic transmissions from one or more sensors arranged in or adjacent the high performance collector. As such, the one or more sensors measure properties such as density, flow characteristics and other such properties to obtain property measurements electronically transmitted to and electronically received by the control device. Based on the property measurements electronically transmitted to and electronically received by the control device, the control device electronically adjusts the supply of additives, solid material and/or dried particulates to the mixer, as discussed in more detail below.

A method of using the above-described equipment (not according to this invention) for reducing flue gas acid gas emissions and for evaporating waste water for zero liquid discharge thereof, comprises removing acid gas from a flue gas containing the acid gas in a wet flue gas desulfurization system using a reagent slurry to reduce flue gas acid gas emissions, supplying a waste water from the wet flue gas desulfurization system to a brine concentrator to produce a concentrated brine, spraying the concentrated brine over dust mixed within a mixer to obtain mixed dust, flash drying the mixed dust in a flash dryer using relatively cool flue gas to evaporate the concentrated brine to obtain a dried dust, and to achieve zero liquid discharge of the waste water generated in the wet flue gas desulfurization system. Also according to this method, the obtained dried dust is separated from flue gas in a high performance collector.

Disclosed herein is an apparatus (not according to this invention) for reducing flue gas acid gas emissions and for evaporating a waste water that comprises a wet flue gas desulfurization system with reagent slurry contact of flue gas for reaction between the reagent slurry and acid gas in the flue gas to remove acid gas from the flue gas to reduce flue gas acid gas emissions, a brine concentrator supplied with the waste water generated in the wet flue gas desulfurization system operative to recover water from the waste water to produce a concentrated brine, a mixer for mixing the concentrated brine with dust to distribute the concentrated brine over a surface area of the dust to produce a mixed dust, and a dryer for drying the mixed dust using a portion of relatively cool flue gas flowing from a heat exchanger or air preheater to obtain a dried dust and to achieve zero liquid discharge of the waste water generated in the wet flue gas desulfurization system. As such, the brine concentrator may produce a concentrated brine from the waste water using heat from a heat supply for evaporation, using membrane separation for water recovery, and/or using pressure from a pressure supply for reverse osmosis water recovery. The so produced concentrated brine is sprayed from one or more nozzles within the mixer to produce mixed dust with a water content of about 1 to about 10 percent, or about 3 percent by weight. The relatively cool flue gas used to dry the mixed dust is an about 1 percent to about 20 percent portion of flue gas flowing from a heat exchanger or air preheater, and has a temperature of about 150°C to about 190°C. Further, this flow of the relatively cool flue gas from the heat exchanger or air preheater to the dryer is controlled using a valve operatively controlled by a control device based on temperature measurements received by the control device from a temperature sensor arranged at or in an outlet of the dryer. Similarly, as noted above, the control device electronically adjusts the supply of additives, solid material and/or dried particulates to the mixer based on property measurements of the mixed dust from the mixer and property measurements of the dried particulates separated in the high performance collector. Also according to this apparatus, the obtained dried dust is separated from flue gas in a high performance collector.

Disclosed herein is a method (not according to this invention) for reducing flue gas acid gas emissions and for evaporating a waste water that comprises removing acid gas from a flue gas containing the acid gas in a wet flue gas desulfurization system to reduce flue gas acid gas emissions, removing the waste water from the wet flue gas desulfurization system to a brine concentrator, producing a concentrated brine in the brine concentrator, spraying the concentrated brine over dust mixed within a mixer to obtain mixed dust, drying the mixed dust in a dryer using relatively cool flue gas to evaporate the concentrated brine to obtain a dried dust and to achieve zero liquid discharge of the waste water from the wet flue gas desulfurization system. As such, the brine concentrator may produce a concentrated brine from the waste water using heat from a heat supply for evaporation, using membrane separation for water recovery, and/or using pressure from a pressure supply for reverse osmosis water recovery. The so produced concentrated brine is sprayed from one or more nozzles within the mixer for distribution of the concentrated brine over a surface area of the dust within the mixer. The relatively cool flue gas used to dry the mixed dust is a portion of flue gas flowing from a heat exchanger or air preheater. Further, this flow of the relatively cool flue gas from the heat exchanger or air preheater to the dryer is controlled by a control device based on temperature measurements received by the control device from a temperature sensor arranged at or in an outlet of the dryer. Similarly, as noted above, the control device electronically adjusts the supply of additives, solid material and/or dried particulates to the mixer based on property measurements of the mixed dust from the mixer and property measurements of the dried particulates separated in the high performance collector. Also according to this method, the obtained dried dust is separated from flue gas in a high performance collector.

Additional features of the subject equipment or apparatus useful for reducing flue gas acid gas emissions with zero liquid discharge of waste water, and the subject method for reducing flue gas acid gas emissions with zero liquid discharge of waste water, will become apparent from the following description in which the subject equipment or apparatus and method of using the same are set forth in detail in conjunction with the accompanying drawing.

### BRIEF DESCRIPTION OF THE DRAWINGS

The subject equipment for reducing flue gas acid gas emissions with zero liquid discharge of waste water, and the subject method for reducing flue gas acid gas emissions with zero liquid discharge of waste water, will now be described in more detail with reference to the accompanying drawing.

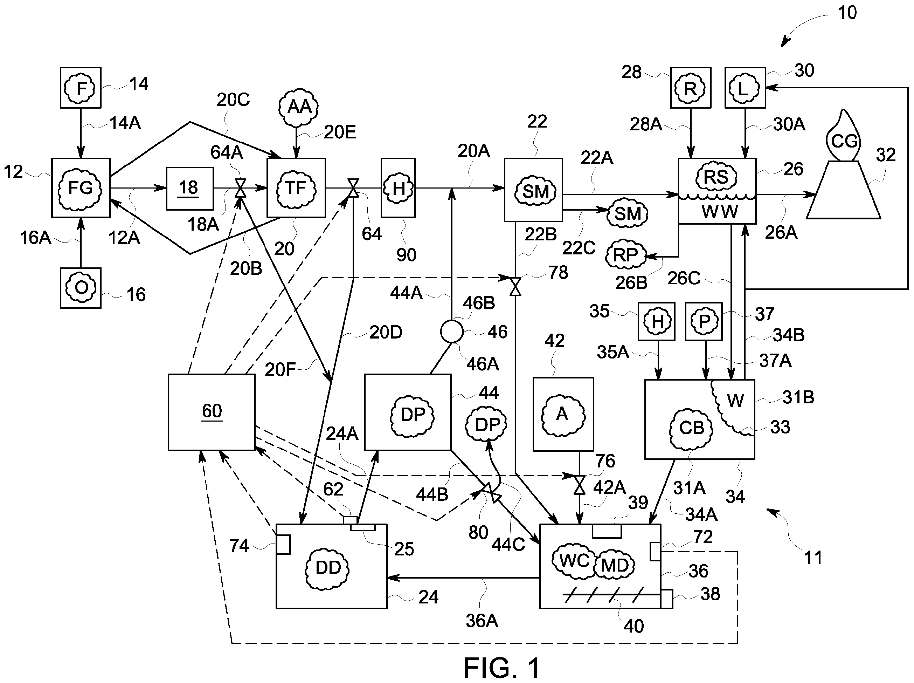

FIG. 1 is a schematic block diagram of a plant according to the subject disclosure for reducing flue gas acid gas emissions with zero liquid discharge of waste water.

### DETAILED DESCRIPTION

Illustrated in Figure 1, is a power or industrial plant 10. Plant 10 includes a combustion unit 12, such as a boiler, that combusts a fuel F supplied to the combustion unit 12 from a fuel supply 14 via duct 14A to produce steam. The produced steam may be supplied to a steam turbine (not shown) for use in generating electricity or supplied elsewhere for other uses such as for example district heating, process heating, or the like. The fuel F supplied to the combustion unit 12 can be a fossil fuel such as coal, oil, or natural gas. The combustion unit 12 may also be supplied at least one oxygen containing gas O, such as for example air, O₂ gas, or another type of gas containing O₂ gas, from an oxygen containing gas supply 16 via duct 16A. In the combustion of fuel F in the presence of at least one oxygen containing gas O, combustion unit 12 in addition to producing steam, also generates flue gas FG. As such, combustion unit 12 is fluidly connected to a nitrogen oxide reducing system 18, such as a selective catalytic reduction (SCR) system, a selective non-catalytic reduction (SNCR) system or another type of system configured to remove nitrogen oxides, e.g., NO₂, NO₃, NOₓ, from the flue gas FG. Combustion unit 12 is fluidly connected to the nitrogen oxide reducing system 18 via duct 12A for a flow of flue gas FG from the combustion unit 12 to the nitrogen oxide reducing system 18.

After removal of nitrogen oxides from the flue gas FG in the nitrogen oxide reducing system 18, flue gas FG flows into fluidly connected heat exchanger or air preheater 20 via duct 18A. Within heat exchanger or air preheater 20, heat energy from the relatively hot flue gas FG is transferred to a heat transfer fluid TF thereby cooling the relatively hot flue gas FG to obtain a relatively cool flue gas FG, and heating a relatively cool heat transfer fluid TF to obtain a relatively hot heat transfer fluid TF. The relatively hot heat transfer fluid TF flows from heat exchanger or air preheater 20 to the combustion unit 12 via duct 20B for use in fuel F combustion and steam production. If the heat exchanger or air preheater 20 is operated with a recirculation of heat transfer fluid TF, relatively cool heat transfer fluid TF flows from combustion unit 12 to the heat exchanger or air preheater 20 via duct 20C for reheating. If the heat exchanger or air preheater 20 is not operated with a recirculation of heat transfer fluid TF, such as in the case of heat exchanger or air preheater 20 being a regenerative rotating type heat exchanger, the heat transfer fluid TF, such as ambient air AA or the like, flows into the heat exchanger or air preheater 20 via controlled duct 20E for heating. The heat transfer fluid HT may be a gas, water, oil, or a similar such heat retaining fluid. After flowing through the heat exchanger or air preheater 20, a relatively large first portion, such as about 80 percent to about 99 percent, or about 95 percent of the now relatively cool flue gas FG flows to a fluidly connected particulate collection system 22 via a main duct 20A. A relatively small second portion, such as about 1 percent to about 20 percent, or about 5 percent of the now relatively cool flue gas FG flows to a fluidly connected flash dryer 24 via a controlled duct 20D, discussed in more detail below. The relatively large first portion of the flue gas FG flows through particulate collection system 22 for separation of solid material SM, such as fly ash and the like, from the flue gas FG. For such purpose, the particulate collection system 22 is a fabric filter system or an electrostatic precipitator system. After the removal of solid material SM from the flue gas FG within particulate collection system 22, flue gas FG flows from the particulate collection system 22 to a fluidly connected wet flue gas desulfurization (WFGD) system 26 via duct 22A. Solid material may be removed from particulate collection system 22 via duct 22B for supply to the mixer 36, or via duct 22C for use elsewhere in plant 10, treatment, or environmentally conservative release to the environment.

An alkaline reagent R such as lime, limestone, hydrated lime, sodium carbonate, trona, and/or alkaline fly ash is supplied from an alkaline reagent supply 28 to the WFGD system 26 via duct 28A, and a liquid L such as water and/or recycled waste water WW is supplied from a liquid supply 30 to the WFGD system 26 via duct 30A for distribution of the alkaline reagent R and the liquid L as a reagent slurry RS within the WFGD system 26. As such, intermixing of the reagent slurry RS with the flue gas FG produces a reaction between acid gas such as hydrogen chloride (HCI), hydrogen fluoride (HF), sulfur dioxide (SO₂), sulfur trioxide (SO₃), and/or sulfuric acid (H₂SO₄) within the flue gas FG and the reagent slurry RS. The reaction between the acid gas and the reagent slurry RS produces a solid reaction product RP such as calcium sulfite (CaSO₃), calcium sulfate (CaSO₄), calcium chloride (CaCl₂), and/or calcium fluoride (CaF₂), and thereby removes acid gas from the flue gas FG. By so removing acid gas from the flue gas FG, flue gas FG acid gas emissions are reduced. After removing acid gas from the flue gas FG, the produced cleaned flue gas CG flows from the WFGD system 26 to a fluidly connected stack 32 via duct 26A for release to the environment via stack 32. Reagent slurry RS may be recirculated within the WFGD system 26, with solid reaction product RP continuously or periodically removed from the WFGD system 26 via duct 26B for use elsewhere within the plant 10, or for use elsewhere in the production of gypsum wall board or the like. Waste water WW from WFGD system 26 is continuously or periodically removed via duct 26C. As such, waste water WW from WFGD system 26 flows via duct 26C into a brine concentrator 34.

Brine concentrator 34 through heated evaporation (not according to this invention), membrane separation and/or reverse osmosis, separates water W from the WFGD system 26 waste water WW. The brine concentrator 34 may separate water W from the waste water WW through heated evaporation (not according to this invention) using heat H from a heat supply 35 via duct 35A fluidly connected to the brine concentrator 34 to heat the waste water WW to produce steam. The steam is then condensed as clean water W, which may be circulated directly to the WFGD system 26 via duct 34B for use therein, circulated to the liquid supply 30 via duct 34B for use in the WFGD system 26, or supplied for use elsewhere within the plant 10. As an alternative to using heat H from a heat supply 35, heat energy or heat H used by the brine concentrator 34 for heated evaporation of the waste water WW to produce a concentrated brine CB may be supplied at least partially from a heat exchanger 90 arranged in the main duct 20A between the fluid connection with the controlled duct 20D and the fluid connection with the return duct 44A used to return the relatively small second portion of relatively cool flue gas to the main duct 20A, via heat duct 90A. Also, waste water WW from the WFGD system 26 may be introduced into the subject brine concentrator 34 without neutralization, and the concentrated brine CB produced in the brine concentrator 34 may be acidic, with a pH below 7.

The brine concentrator 34 may separate water W from the waste water WW through membrane separation by using a semipermeable membrane 33 that allows for the flow of water W through the membrane 33 but blocks the flow of salts and other impurities from flow through the membrane 33. The clean water W collected following flow through the membrane 33 may be circulated directly to the WFGD system 26 via duct 34B for use therein, circulated to the liquid supply 30 via duct 34B for use in the WFGD system 26, or supplied for use elsewhere within the plant 10. Alternatively, the brine concentrator 34 may separate water W from the waste water WW through reverse osmosis by applying a pressure P from a pressure supply 37 via fluidly connected duct 37A to the waste water WW within the brine concentrator 34 to reverse an osmotic process to force clean water W from a waste water side 31A of membrane 33 to a clean water side 31B of membrane 33. The clean water W collected following flow through the membrane 33 may be directly circulated to the WFGD system 26 via duct 34B for use therein, circulated to the liquid supply 30 via duct 34 B for use in the WFGD system 26, or supplied for use elsewhere within the plant 10. Waste water WW from the WFGD system 26 includes dissolved solids or salts and suspended solids. As such, the waste water WW has a total solids concentration of about 1 weight percent to about 20 weight percent, or about 5 weight percent. As described above, within brine concentrator 34, water W is recovered from this waste water WW to produce a concentrated brine CB of about 20 percent to about 55 percent, or about 30 percent solids by weight. The recovered water W flows from brine concentrator 34 to fluidly connected WFGD system 26, to liquid supply 30 via duct 34B, and/or elsewhere for use in plant 10. Concentrated brine CB flows from brine concentrator 34 to a fluidly connected mixer 36 via duct 34A.

Mixer 36 comprises a motor 38 and agitators or rotors 40 driven by the motor 38 operable for mixing the concentrated brine CB with additives A such as lime and/or hydrated lime from a fluidly connected additive supply 42 via duct 42A, solid material SM from fluidly connected particulate collection system 22 via duct 22B, and/or separated dried particulates DP from fluidly connected high performance collector 44 via duct 44B. Concentrated brine CB is sprayed within mixer 36 via one or more nozzles 39 for distribution on surfaces of the additives A, solid material SM and/or dried particulates DP to obtain a moist mixed dust MD of about 1 percent to about 10 percent, or about 3 percent, water content WC. Mixed dust MD from mixer 36 flows to fluidly connected flash dryer 24 via duct 36A.

Within flash dryer 24, mixed dust MD from mixer 36 is flash dried using the relatively small second portion, such as about 1 percent to about 20 percent, or about 5 percent of the relatively cool flue gas FG from heat exchanger or air preheater 20. As such, the relatively cool flue gas FG from heat exchanger or air preheater 20 used in flash dryer 24 has a temperature of about 150°C to about 190°C, or about 170°C. The mixed dust MD concentration in the flash dryer 24 is greater than about 1000 g/Nm³. The mixed dust MD within flash dryer 24 is efficiently flash dried by evaporation of the relatively low water content WC of the mixed dust MD into the flue gas FG. For purposes of this disclosure, flash drying is defined as drying of the mixed dust with about a 1 percent to about 10 percent, or about a 3 percent, water content by weight within about 3 seconds to about 60 seconds, or about 30 seconds. Such relatively rapid evaporation within the flash dryer 24 is achieved as the relatively low water content WC of the mixed dust MD is distributed over a relatively large total surface area of the mixed dust MD. The flash dryer 24 used for this purpose is for example a pneumatic conveyor dryer, a fluidized bed dryer, or other such dryer capable of flash drying as defined herein. Flash drying of the mixed dust MD produces dried dust DD. Dried dust DD entrained by the flue gas FG flows from outlet 25 of flash dryer 24 to fluidly connected high performance collector 44 via duct 24A.

High performance collector 44 is a relatively high performance, about 97 percent or over, or about 98 percent or over, efficiency particulate collector. High performance collector 44 may be a cyclone collector, a fabric filter or an electrostatic precipitator operable for about 97 percent or over, or about 98 percent or over, particulate collection efficiency of dried dust DD to obtain separated dried particulates DP. Separated dried particulates DP collected in high performance collector 44 may be supplied to mixer 36 via duct 44B, used elsewhere in plant 10 or disposed of in another environmentally conservative manner via duct 44C. Flue gas FG from high performance collector 44 flows via return duct 44A to main duct 20A for mixing with the relatively large first portion of relatively cool flue gas FG upstream of the particulate collection system 22. To improve flow of flue gas FG through flash dryer 24 and high performance collector 44, a fan 46 is arranged within return duct 44A. As such, the fan 46 is arranged in return duct 44A with a low pressure side 46A upstream of the fan 46 with regard to flue gas FG flow through return duct 44A and a high pressure side 46B downstream of the fan 46 with regard to flue gas flow through return duct 44A.

The subject plant 10 also includes a control device 60. The control device 60 electronically receives temperature measurements measured by one or more temperature sensors 62 arranged in or adjacent to the outlet 25 of the flash dryer 24. Based on the temperature measurements received by the control device 60 from the one or more temperature sensors 62, the control device 60 electronically signals adjustment of a flow valve 64 arranged in the controlled duct 20D at main duct 20A for the flow of the relatively small second portion of relatively cool flue gas FG to the flash dryer 24. For example, if the temperature measurements received by the control device 60 are higher than a programmed temperature set point or range, the control device 60 will electronically signal adjustment of the flow valve 64 to reduce the flow of relatively cool flue gas FG to the flash dryer 24. If the temperature measurements received by the control device 60 are about the same as a programmed temperature set point or range, the control device 60 will not electronically signal adjustment of the flow valve 64 to affect the flow of relatively cool flue gas FG to the flash dryer 24. If the temperature measurements received by the control device 60 are lower than a programmed temperature set point or range, the control device 60 will electronically signal adjustment of the flow valve 64 to increase the flow of relatively cool flue gas FG to the flash dryer 24. As an option, another flow valve 64A may be arranged upstream with respect to flue gas FG flow, of heat exchanger or air preheater 20. As such, flow valve 64A fluidly connects duct 18A to a duct 20F fluidly connected to duct 20D upstream with respect to flue gas FG flow, of flash dryer 24. Flow valve 64A is controlled by control device 60 in the same manner as that disclosed for flow valve 64. The purpose of optional flow valve 64A and duct 20F is to allow for increased flue gas FG temperature control within flash dryer 24. For example, should mixed dust MD from the mixer 36 have a water content WC too great to achieve flash drying thereof using a temperature flue gas FG supplied to the flash dryer 24 via flow valve 64, a higher temperature flue gas FG may be added to the flue gas FG supplied to the flash dryer 24 via flow valve 64, via optional flow valve 64A. By optionally adding a higher temperature flue gas FG via optional flow valve 64A to the flue gas FG supplied flash dryer 24 via flow valve 64, a higher temperature flue gas FG is supplied to the flash dryer 24. Through the optional use to the extent necessary of this higher temperature flue gas FG supplied to the flash dryer 24 via flow valve 64A, the exemplified mixed dust MD from the mixer 36 having a water content WC otherwise too great for flash drying using the temperature flue gas FG supplied via flow valve 64, is through use of higher temperature flue gas FG via optional flow valve 64A, effectively flash dried within flash dryer 24.

Similarly, the control device 60 electronically receives measurements of the properties of the mixed dust MD from the mixer 36 via one or more sensors 72 arranged in or adjacent the mixer 36, and/or properties of the dried particulates DP separated in the high performance collector 44 via one or more sensors 74 arranged in or adjacent the high performance collector 44. As such, the one or more sensors 72, 74 measure properties such as density, flow characteristics and other such properties to obtain property measurements electronically transmitted to the control device 60. Based on the property measurements electronically transmitted to the control device 60, the control device 60 electronically adjusts supply of additives A via valve 76 arranged in duct 42A, supply of solid material SM via valve 78 arranged in duct 22B, and/or supply of dried particulates DP via valve 80 arranged in duct 44B, to the mixer 36. For example, if one or more property measurements electronically transmitted to and received by the control device 60 differ from programmed property measurement set points or ranges, the control device 60 will electronically signal adjustment of one or more valves 76, 78, 80 to increase/decrease the supply of additive A, solid material SM and/or dried particulates DP to the mixer 36 for purposes of adjusting the properties of the mixed dust MD to achieve correlation with the programmed property measurement set points or ranges. Likewise, if the property measurements electronically transmitted to and received by the control device 60 correlate with the programmed property measurement set points or ranges, the control device 60 will not electronically signal adjustment of one or more valves 76, 78, 80 to increase/decrease the supply of additive A, solid material SM and/or dried particulates DP to the mixer 36 for purposes of adjusting the properties of the mixed dust MD to achieve correlation with the programmed property measurement set points or ranges.

A method of using the above-described apparatus or equipment 11 of plant 10 for reducing flue gas FG acid gas emissions and for evaporating waste water WW (not according to this invention), comprises removing acid gas from a flue gas FG containing the acid gas in a wet flue gas desulfurization system 26 using a reagent slurry RS to reduce flue gas FG acid gas emissions, removing a waste water WW from the wet flue gas desulfurization system 26 to a brine concentrator 34 to produce a concentrated brine CB, spraying the concentrated brine CB over a mixed dust MD mixed in a mixer 36, flash drying the mixed dust MD in a flash dryer 24 using relatively cool flue gas FG to evaporate the concentrated brine CB to obtain a dried dust DD, and to achieve zero liquid discharge of the waste water WW from the wet flue gas desulfurization system 26. Also according to this method, the obtained dried dust DD is separated from flue gas FG in a high performance collector 44.

In summary, disclosed herein is an apparatus 11 for reducing flue gas FG acid gas emissions with zero liquid discharge of waste water WW that comprises a wet flue gas desulfurization system 26 with reagent slurry RS contact of flue gas FG for reaction between the reagent slurry RS and acid gas in the flue gas FG to remove acid gas from the flue gas FG to reduce flue gas FG acid gas emissions, a brine concentrator 34 supplied the waste water WW generated in the wet flue gas desulfurization system 26 operative to recover water W from the waste water WW to produce a concentrated brine CB, a mixer for mixing the concentrated brine CB with mixed dust MD to distribute the concentrated brine over a surface area of the mixed dust MD to produce a moistened mixed dust MD, and a dryer 24 for drying the moistened mixed dust MD using a portion of relatively cool flue gas FG flowing from a heat exchanger or air preheater 20 to obtain a dried dust DD and to achieve zero liquid discharge of the waste water WW generated in the wet flue gas desulfurization system 26. As such, the brine concentrator 34 may produce a concentrated brine CB from the waste water WW using heat H from a heat supply 35 for evaporation (not according to this invention), using a membrane 33 for membrane separation for water W removal, and/or using pressure P from a pressure supply 37 and a membrane 33 for reverse osmosis water W removal. The so produced concentrated brine CB is supplied via spraying from one or more nozzles 39 within the mixer 36 to produce moistened mixed dust MD with a water content of about 1 to about 10 percent, or about 3 percent by weight. The relatively cool flue gas FG used to dry the moistened mixed dust MD is an about 1 percent to about 20 percent portion of flue gas FG flowing from a heat exchanger or air preheater 20, and has a temperature of about 150°C to about 190°C. Further, this flow of the relatively cool flue gas FG from the heat exchanger or air preheater 20 to the dryer 24 is controlled using a valve 64 operatively controlled by a control device 60 based on temperature measurements received by the control device 60 from one or more temperature sensors 62 arranged at or in an outlet 25 of the dryer 24. Similarly, as noted above, the control device 60 electronically adjusts the supply of additives A, solid material SM and/or dried particulates DP to the mixer 36 based on property measurements of the mixed dust MD from the mixer 36 and property measurements of the dried particulates DP separated in the high performance collector 44. Also according to this apparatus 11, the obtained dried dust DD is separated from flue gas FG in a high performance collector 44.

In summary, disclosed herein is a method for reducing flue gas FG acid gas emissions with zero liquid discharge of waste water WW that comprises removing acid gas from a flue gas FG containing the acid gas in a wet flue gas desulfurization system 26 to reduce flue gas FG acid gas emissions, removing the waste water WW from the wet flue gas desulfurization system 26 to a brine concentrator 34, producing a concentrated brine CB in the brine concentrator 34, supplying the concentrated brine CB via spraying over mixed dust MD within a mixer 36, flash drying the mixed dust MD in a dryer 24 using relatively cool flue gas FG to obtain a dried dust DD and to achieve zero liquid discharge of the waste water WW from the wet flue gas desulfurization system 26. As such, the brine concentrator 34 may produce a concentrated brine CB from the waste water WW using heat H from a heat supply 35 for evaporation (not according to this invention), using a membrane 33 for membrane separation for water W removal, and/or using pressure P from a pressure supply 37 and a membrane 33 for reverse osmosis water W removal. The so produced concentrated brine CB is supplied via spraying from one or more nozzles 39 within the mixer 36 for distribution of the concentrated brine CB over a surface area of the mixed dust MD within the mixer 36. The relatively cool flue gas FG used to dry the moistened mixed dust MD is a portion of flue gas FG flowing from a heat exchanger or air preheater 20. Further, this flow of the relatively cool flue gas FG from the heat exchanger or air preheater 20 to the dryer 24 is controlled by a control device 60 based on temperature measurements received by the control device 60 from one or more temperature sensors 62 arranged at or in an outlet 25 of the dryer 24. Similarly, as noted above, the control device 60 electronically adjusts the supply of mixed dust MD, i.e., additives A, solid material SM and/or dried particulates DP, to the mixer 36 based on property measurements of the mixed dust MD from the mixer 36 and property measurements of the dried particulates DP separated in the high performance collector 44. Also according to this method, the obtained dried dust DD is separated from flue gas FG in a high performance collector 44.

Embodiments of the apparatus or equipment 11 for reducing flue gas FG acid gas emissions with zero liquid discharge of waste water WW are configured to avoid capital and operating costs associated with conventional waste water WW treatment, reduce or eliminate permitting and reporting of waste water WW discharge, reduce capital and operating costs associated with compliance with air emission regulations, improve particulate collection by using a high performance collector 44 following concentrated brine CB drying to avoid particulate collection system 22 overload, and reduce reagent R consumption as compared to dry sorbent injection systems.

It should be appreciated that various changes can be made to embodiments of the subject apparatus or equipment 11 for reducing flue gas FG acid gas emissions with zero liquid discharge of waste water WW to account for different design criteria. Such as, for purposes of example, the size, shape or configuration of ducts for transporting different fluids/materials to and from different apparatus or equipment 11 can be any of a number of suitable shapes, sizes, and/or configurations.

While various exemplified embodiments have been disclosed herein, it will be understood by those skilled in the art that various changes can be made and equivalents can be substituted without departing from the scope of the claims. Therefore, it is intended that the disclosure not be limited to the particular embodiments described, but rather include all embodiments falling within the scope of the appended claims.

## Claims

1. An apparatus for reducing flue gas acid gas emissions with zero liquid discharge of waste water, comprising:
a wet flue gas desulfurization system (26) with reagent slurry contact of flue gas for reaction between the reagent slurry and acid gas in the flue gas to remove acid gas from the flue gas to reduce flue gas acid gas emissions;
a brine concentrator (34) supplied with waste water generated in the wet flue gas desulfurization system (26) and operative to produce a concentrated brine from the waste water;
a mixer (36) for mixing the concentrated brine with a dust to distribute the concentrated brine over a surface area of the dust to produce a mixed dust; and
a dryer (24) fluidly connected to a main duct of the cool flue gas (20A) via a controlled duct (20D), for drying the mixed dust to obtain a dried dust using a portion of cool flue gas flowing from an air preheater (90) via the main duct (20A) to a fluidly connected particle collection system and after to the wet flue gas desulfurization system 26,
**characterized in that**
the brine concentrator (34) comprises a semipermeable membrane (33) for membrane separation that allows for the flow of water W through the membrane 33 but blocks the flow of salts and other impurities and a duct (34B) connecting the brine concentrator (34) with the wet flue gas desulfurization system (26) for recovery of clean water or that the brine concentrator (34) comprises a membrane (33) and is connected to a pressure supply (37) via a duct (37A) to reverse an osmotic process to force clean water W from a waste water side (31A) of membrane (33) to clean water side (31B) and further comprises a duct (34B) connecting the clean water side (31B) with the wet flue gas desulfurization system (26) for water recovery.

2. The apparatus of claim 1, further comprising a collector (44) operative for collecting particulates from the portion of cool flue gas used in the dryer (24).

3. The apparatus of any one of claims 1 or 2, further comprising a control device (60) controlling supply of the dust to the mixer based on dust property measurements measured by sensors (72) and electronically transmitted from the sensors (72) to the control device (60).

4. The apparatus of any one of claims 1 to 3, wherein flow of the cool flue gas to the dryer (24) is controlled using a valve (64) operatively controlled by a control device (60) based on temperature measurements received by the control device (60) from a temperature sensor (62) arranged at an outlet of the dryer (24).

5. A method for reducing flue gas acid gas emissions with zero liquid discharge of waste water, making use of an apparatus for reducing flue gas acid gas emissions with zero liquid discharge of waste water according to any one of the preceding claims comprising:
removing acid gas from a flue gas containing the acid gas in a wet flue gas desulfurization system (26) to reduce flue gas acid gas emissions,
removing the waste water from the wet flue gas desulfurization system (26) to a brine concentrator;
producing a concentrated brine in the brine concentrator (34) and
circulating the clean water (W) collected following flow through the membrane (33) directly to the WFGD system (26) via a duct (34B) for use therein, to a liquid supply (30) via the duct (34B) for use in the WFGD system (26), or supplying it for use elsewhere within the plant (10);
supplying the concentrated brine to a mixed dust within a mixer (36);
drying the mixed dust from the mixer (36) in a dryer (24) using cool flue gas to obtain a dried dust.

6. The method of claim 5, further comprising collecting particulates from the cool flue gas used in the dryer (24) in a collector (44).

7. The method of any one of claims 5 to 6, further comprising controlling supply of the mixed dust to the mixer (36) using a control device (60) based on dust property measurements measured by sensors and electronically transmitted from the sensors to the control device (60).

8. The method of any one of claims 5 to 7, wherein the concentrated brine is supplied to the mixer (36) to obtain mixed dust with a water content of about 1 to about 10 percent by weight.

9. The method of any one of claims 5 to 8, wherein flow of the cool flue gas to the dryer (24) is controlled by a control device (60) based on temperature measurements received by the control device (60) from a temperature sensor (62) arranged at an outlet of the dryer (24).

## Patentansprüche

1. Vorrichtung zum Reduzieren von Rauchgas-Sauergas-Emissionen ohne Flüssigkeitsausstoß von Abwasser, umfassend:
eine Rauchgas-Nassentschwefelungsanlage (26) mit einem Reagenzienaufschlämmungskontakt von Rauchgas zur Reaktion zwischen der Reagenzienaufschlämmung und dem Sauergas in dem Rauchgas zum Entfernen von Sauergas aus dem Rauchgas, um Rauchgas-Sauergas-Emissionen zu reduzieren;
einen Solekonzentrator (34), der mit Abwasser versorgt wird, das in der Rauchgas-Nassentschwefelungsanlage (26) erzeugt wird und dazu dient, eine konzentrierte Sole aus dem Abwasser zu erzeugen;
einen Mischer (36) zum Mischen der konzentrierten Sole mit einem Staub, um die konzentrierte Sole über eine Oberfläche des Staubs zu verteilen, um einen Mischstaub zu erzeugen; und
einen Trockner (24), der über eine Regelleitung (20D) mit einer Hauptleitung (20A) des kühlen Rauchgases fluidisch verbunden ist, zum Trocknen des Mischstaubs unter Verwendung eines Teils von von einem Luftvorwärmer (90) über die Hauptleitung (20A) zu einem fluidisch verbundenen Partikelsammelsystem und danach zur Rauchgas-Nassentschwefelungsanlage 26 strömenden kühlen Rauchgases; **dadurch gekennzeichnet, dass**
der Solekonzentrator (34) eine semipermeable Membran (33) zur Membrantrennung, die das Strömen von Wasser W durch die Membran 33 ermöglicht, aber das Strömen von Salzen und anderen Verunreinigungen blockiert, und eine Leitung (34B) umfasst, die den Solekonzentrator (34) mit der Rauchgas-Nassentschwefelungsanlage (26) zur Rückgewinnung von sauberem Wasser verbindet, oder **dadurch, dass**
der Solekonzentrator (34) eine Membran (33) umfasst und über eine Leitung (37A) mit einer Druckversorgung (37) verbunden ist, um einen osmotischen Prozesses umzukehren, um sauberes Wasser W von einer Abwasserseite (31A) der Membran (33) zur Reinwasserseite (31B) zu drücken, und ferner einen Leitung (34B) umfasst, um zur Wasserrückgewinnung die Reinwasserseite (31B) mit der Rauchgas-Nassentschwefelungsanlage (26) zu verbinden.

2. Vorrichtung nach Anspruch 1, ferner umfassend einen Kollektor (44), der zum Sammeln von Partikeln aus dem Anteil des kalten Rauchgas in dem Trockner (24) dient.

3. Vorrichtung nach einem der Ansprüche 1 bis 2, ferner umfassend eine Steuereinrichtung (60) zur Steuerung der Zufuhr des Staubs zum Mischer basierend auf durch Sensoren (72) gemessenen und von den Sensoren (72) an die Steuereinrichtung (60) elektronisch übertragenen Staubeigenschaftsmesswerten.

4. Vorrichtung nach einem der Ansprüche 1 bis 3, wobei das Strömen des kühlen Rauchgases zum Trockner (24) unter Verwendung eines von einer Steuereinrichtung (60) betriebsmäßig gesteuerten Ventils (64) basierend auf Temperaturmessungen, die die Steuereinrichtung (60) von einem am Auslass des Trockners (24) angeordneten Temperatursensor (62) empfängt, gesteuert wird.

5. Verfahren zum Reduzieren von Rauchgas-Sauergas-Emissionen ohne Flüssigkeitsausstoß von Abwasser, unter Verwendung einer Vorrichtung zum Reduzieren von Rauchgas-Sauergas-Emissionen ohne Flüssigkeitsausstoß von Abwasser nach einem der vorhergehenden Ansprüche, umfassend:
Entfernen von Sauergas aus einem das Sauergas enthaltende Rauchgas in einer Rauchgas-Nassentschwefelungsanlage (26), um Rauchgas-Sauergas-Emissionen zu reduzieren,
Entfernen des Abwassers aus der Rauchgas-Nassentschwefelungsanlage (26) zu einem Solekonzentrator;
Herstellen einer konzentrierten Sole in dem Solekonzentrator (34) und
Zirkulieren des sauberen Wassers (W), das beim Strömen durch die Membran (33) gesammelt wurde, direkt an die Rauchgas-Nassentschwefelungsanlage (WFGD-Anlage) (26) über eine Leitung (27B) zur Verwendung darin, an ein Flüssigkeitsversorgungssystem (30) über die Leitung (34B) zur Verwendung in der Rauchgas-Nassentschwefelungsanlage (26), oder Zuführen zur Verwendung an anderer Stelle innerhalb der Anlage (10);
Zuführen der konzentrierten Sole zu einem Mischstaub in einem Mischer (36);
Trocknen des Mischstaubs von dem Mischer (36) in einem Trockner (24) unter Verwendung von kühlem Rauchgas, um einen getrockneten Staub zu erhalten.

6. Verfahren nach Anspruch 5, ferner umfassend das Sammeln von Partikeln aus dem in dem Trockner (24) verwendeten kühlen Rauchgas in einem Kollektor (44).

7. Verfahren nach einem der Ansprüche 5 bis 6, ferner umfassend das Steuern der Zufuhr des Mischstaubs zu dem Mischer (36) unter Verwendung einer Steuervorrichtung (60), basierend auf Staubeigenschaftsmessungen, die von Sensoren gemessen und elektronisch von den Sensoren an die Steuervorrichtung (60) übertragen werden.

8. Verfahren nach einem der Ansprüche 5 bis 7, wobei die konzentrierte Sole dem Mischer (36) zugeführt wird, um Mischstaub mit einem Wassergehalt von etwa 1 bis 10 Gew.-% zu erhalten.

9. Vorrichtung nach einem der Ansprüche 5 bis 8, wobei das Strömen des kühlen Rauchgases zum Trockner (24) durch eine Steuereinrichtung (60) basierend auf Temperaturmessungen, die die Steuereinrichtung (60) von einem am Auslass des Trockners (24) angeordneten Temperatursensor (62) erhält, gesteuert wird.

## Revendications

1. Appareil de réduction des émissions de gaz acide de gaz de combustion avec un rejet d'eaux usées zéro liquide, comprenant :
un système de désulfuration de gaz de combustion par voie humide (26) avec un contact de suspension de réactif de gaz de combustion pour une réaction entre la suspension de réactif et le gaz acide dans le gaz de combustion pour éliminer le gaz acide du gaz de combustion pour réduire les émissions de gaz acide de gaz de combustion ;
un concentrateur de saumure (34) alimenté en eaux usées générées dans le système de désulfuration de gaz de combustion par voie humide (26) et conçu pour produire une saumure concentrée à partir des eaux usées ;
un mélangeur (36) pour mélanger la saumure concentrée avec une poussière pour distribuer la saumure concentrée sur une surface de la poussière pour produire une poussière mélangée ; et
un séchoir (24) en communication fluidique avec un conduit principal du gaz de combustion froid (20A) par le biais d'un conduit commandé (20D), pour sécher la poussière mélangée pour obtenir une poussière séchée à l'aide d'une partie de gaz de combustion froid circulant à partir d'un réchauffeur d'air (90) par le biais du conduit principal (20A) vers un système de collecte de particules relié fluidiquement et ensuite vers le système de désulfuration de gaz de combustion par voie humide (26), **caractérisé en ce que**
le concentrateur de saumure (34) comprend une membrane semi-perméable (33) pour une séparation membranaire qui permet l'écoulement de l'eau (W) à travers la membrane (33) mais qui bloque l'écoulement de sels et autres impuretés et un conduit (34B) reliant le concentrateur de saumure (34) au système de désulfuration de gaz de combustion par voie humide (26) pour la récupération d'eau propre ou
le concentrateur de saumure (34) comprend une membrane (33) et est relié à une pression d'alimentation (37) par le biais d'un conduit (37A) pour inverser un procédé osmotique pour forcer l'eau propre (W) à passer d'un côté eaux usées (31A) de la membrane (33) à un côté eau propre (31B) et comprend en outre un conduit (34B) reliant le côté eau propre (31B) au système de désulfuration de gaz de combustion par voie humide (26) pour la récupération d'eau.

2. Appareil selon la revendication 1, comprenant en outre un collecteur (44) conçu pour collecter des particules provenant de la partie de gaz de combustion froid utilisée dans le séchoir (24).

3. Appareil selon l'une quelconque des revendications 1 ou 2, comprenant en outre un dispositif de commande (60) commandant la fourniture de la poussière au mélangeur en fonction de mesures de propriété de poussière mesurées par des capteurs (72) et transmises électroniquement des capteurs (72) au dispositif de commande (60).

4. Appareil selon l'une quelconque des revendications 1 à 3, dans lequel l'écoulement du gaz de combustion froid vers le séchoir (24) est commandé à l'aide d'une soupape (64) commandée de manière opérationnelle par un dispositif de commande (60) en fonction de mesures de température reçues par le dispositif de commande (60) en provenance d'un capteur de température (62) agencé au niveau d'une sortie du séchoir (24).

5. Procédé de réduction d'émissions de gaz acide de gaz de combustion avec un rejet d'eaux usées à zéro liquide, mettant en oeuvre un appareil de réduction des émissions de gaz acide de gaz de combustion avec un rejet d'eaux usées à zéro liquide selon l'une quelconque des revendications précédentes, consistant à :
éliminer un gaz acide d'un gaz de combustion contenant le gaz acide dans un système de désulfuration de gaz de combustion par voie humide (26) pour réduire les émissions de gaz acide de gaz de combustion,
éliminer les eaux usées du système de désulfuration de gaz de combustion par voie humide (26) vers un concentrateur de saumure ;
produire une saumure concentrée dans le concentrateur de saumure (34) et
faire circuler l'eau propre (W) collectée après s'être écoulée à travers la membrane (33) directement vers le système WFGD (26) par le biais d'un conduit (34B) destiné à être utilisé à l'intérieur de celui-ci, vers une alimentation en liquide (30) par le biais du conduit (34B) destiné à être utilisé dans le système WFGD (26), ou la fournir pour une utilisation ailleurs à l'intérieur de l'usine (10) ;
fournir la saumure concentrée à une poussière mélangée à l'intérieur d'un mélangeur (36) ;
faire sécher la poussière mélangée du mélangeur (36) dans un séchoir (24) à l'aide d'un gaz de combustion froid pour obtenir une poussière séchée.

6. Procédé selon la revendication 5, comprenant en outre la collecte de particules provenant du gaz de combustion froid utilisé dans le séchoir (24) dans un collecteur (44).

7. Procédé selon l'une quelconque des revendications 5 à 6, comprenant en outre la commande de la fourniture de la poussière mélangée au mélangeur (36) à l'aide d'un dispositif de commande (60) en fonction de mesures de propriété de poussière mesurées par des capteurs et transmises électroniquement des capteurs au dispositif de commande (60).

8. Procédé selon l'une quelconque des revendications 5 à 7, dans lequel la saumure concentrée est fournie au mélangeur (36) pour obtenir une poussière mélangée avec une teneur en eau d'environ 1 à environ 10 pour cent en poids.

9. Procédé selon l'une quelconque des revendications 5 à 8, dans lequel l'écoulement du gaz de combustion froid vers le séchoir (24) est commandé par un dispositif de commande (60) en fonction de mesures de température reçues par le dispositif de commande (60) en provenance d'un capteur de température (62) agencé au niveau d'une sortie du séchoir (24).
